# DEMANDE DE BREVET EUROPEEN

(11) **EP 3 001 412 A1**
(43) Date de publication de la demande: **30.03.2016**
(21) Numéro de dépôt: 15186085.5
(22) Date de dépôt: 21.09.2015
(51) Int. Cl.: G10K 15/02

(54) **SYSTÈME DE RESTITUTION SONORE AVEC CASQUES AUDIO DOTÉS DE PROCESSEURS SONORES, COMPOSANTS D'UN TEL SYSTÈME ET PROCÉDÉ ASSOCIÉ**

(30) Priorité: 29.09.2014 FR 1459185
(71) Demandeur: Parrot, 75010 Paris (FR)
(72) Inventeur: MATHIEU, Jérôme, 75014 PARIS (FR); LHUILLERY, Frédéric, 75010 PARIS (FR)
(74) Mandataire: Dupuis-Latour, Dominique

(57) **Abrégé**

Le système comprend des casques audio (200, 400) pouvant appliquer des traitements audio en réponse à des préréglages communs à l'ensemble des casques, des terminaux intelligents (300, 500) pourvus de moyens de génération de flux audio, et des moyens de communication pour transmettre aux casques un flux audio et des préréglages à appliquer à ce flux. Un serveur de préréglages (100) mémorise les préréglages associés à des oeuvres. Certains terminaux (300) peuvent générer des pré-réglages et les transmettre au serveur, tandis que d'autres terminaux (500) récupèrent ces préréglages pour les appliquer aux oeuvres correspondantes au moment de reproduire ces dernières.

## Description

La présente invention concerne d'une façon générale les casques audio, et plus particulièrement la personnalisation de la restitution sonore avec de tels casques.

De tels casques embarquent une batterie rechargeable et un circuit de réception sans fil, par exemple radio (typiquement selon les spécifications *Bluetooth -* marque déposée du Bluetooth SIG) ou infrarouge, apte à recevoir les signaux audio véhiculés par un tel canal pour les décoder et les transformer en signaux sonores analogiques appliqués aux transducteurs. Les casques audio les plus récents abritent également des circuits électroniques de traitement audio destinés à réaliser une égalisation, à appliquer des effets sonores, à contrôler dynamiquement le volume de restitution, à neutraliser les bruits ambiants, etc.

En général, les préréglages d'égalisation et d'effets sonores sont appliqués au choix de l'utilisateur, par commande à l'aide d'une interface située sur un dispositif distant, tel qu'un *smartphone,* communiquant avec le casque audio typiquement par une liaison sans fil selon le protocole de communication *Bluetooth.* Le casque commercialisé par la société déposante sous la dénomination commerciale *Zik* (marque déposée) possède une telle fonctionnalité.

Dans un domaine voisin, le US 2014/0073429 A1 décrit un casque interfacé par une liaison sans fil à une console de jeu video, et pourvu d'un processeur de signal intégrant plusieurs préréglages conservés en mémoire. Ces préréglages peuvent être éventuellement des préréglages téléchargés depuis un site distant via la console de jeu. Ils sont sélectionnables au gré de l'utilisateur au moyen d'un bouton de sélection et d'un menu présenté sur un écran intégré à une oreillette du casque.

La présente invention vise à enrichir les possibilités de création, de partage et d'utilisation de préréglages sonores d'un casque audio muni de préréglages d'égalisation commutables.

En particulier, l'invention vise à permettre qu'un artiste ou référent donné puisse suggérer ou imposer qu'une oeuvre donnée, typiquement l'oeuvre de l'artiste (auteur, compositeur, interprète, arrangeur, etc.), puisse être écoutée par le public dans des conditions de restitution telles que l'artiste les aura souhaitées.

L'invention vise également à permettre de restituer l'oeuvre de façon fidèle à l'esprit de l'artiste, ou à sélectionner des préréglages de restitution choisis parmi un groupe de préréglages suggérés par un ou plusieurs artistes ou autres référents en la matière.

L'invention propose ainsi, selon un premier aspect, un système de restitution sonore à l'aide de casques audio comprenant, de manière en elle-même connue comme divulgué par le US 2014/0073429 A1 précité :
- un ensemble de casques audio aptes à effectuer une restitution sonore en appliquant à l'aide d'un processeur sonore des traitements en réponse à des préréglages de restitution communs pour l'ensemble des casques ;
- un ensemble de terminaux intelligents pourvus de moyens de génération d'un flux audio ;
- des moyens de communication entre les terminaux intelligents et les casques audio associés, aptes à transmettre à ces derniers à partir des terminaux intelligents un flux audio ainsi que des préréglages de restitution à appliquer audit flux ;
- un serveur de préréglages, apte à mémoriser des préréglages de restitution associés respectivement à des oeuvres ;
- des moyens de communication par réseau entre ledit serveur et les terminaux intelligents ; et
- des moyens prévus dans au moins certains terminaux intelligents pour récupérer à partir du serveur des préréglages de restitution associés à des oeuvres pour lesquelles ils sont susceptibles d'émettre des flux audio, et pour les transmettre au casque audio associé en vue de la restitution.

De façon caractéristique de l'invention :
- les moyens de communication sont également aptes à transmettre aux casques audio à partir des terminaux intelligents des marqueurs caractéristiques associés au flux audio ;
- il est prévu dans au moins certains terminaux intelligents des moyens pour générer des préréglages de restitution associés à des oeuvres en réponse à des actions via une interface utilisateur, et à les transmettre au serveur ; et
- il est prévu dans chaque casque audio une mémoire contenant une base de données de préréglages de restitution, et des moyens (450) pour former une requête d'interrogation de la base de données à partir desdits marqueurs caractéristiques reçus d'un terminal intelligent (500) en association avec un flux audio afin de retrouver les préréglages de restitution correspondants.

Avantageusement, les marqueurs caractéristiques sont des marqueurs d'identification d'au moins l'un parmi un morceau, un album, un artiste, un genre.

L'invention propose, selon un deuxième aspect, un ensemble formé d'un casque audio et d'un terminal intelligent, le terminal intelligent étant apte à transmettre un flux audio au casque audio par une liaison. Le casque audio comprend un processeur apte à appliquer un traitement sonore sur le flux audio à restituer en réponse à un marqueur caractéristique associé au flux audio, une mémoire apte à stocker des préréglages, et des moyens (450) pour lire dans la mémoire et appliquer audit processeur un préréglage choisi en fonction du marqueur caractéristique reçu.

De façon caractéristique de l'invention, le terminal intelligent est également apte à transmettre au casque audio des marqueurs caractéristiques associées audit flux audio, et le casque audio comprend des moyens pour lire dans la mémoire et appliquer au processeur un préréglage choisi dans la mémoire en fonction du marqueur caractéristique reçu du terminal intelligent.

Dans une mise en oeuvre préférée mais facultative, lesdits marqueurs caractéristiques sont des métadonnées associées à un fichier audio apte à être lu dans le terminal intelligent.

Il est par ailleurs avantageux que le terminal intelligent comprenne des moyens de mise à jour des préréglages de restitution mémorisés dans le casque audio, à partir de préréglages de restitution récents reçus via un réseau à partir d'un serveur de préréglages.

L'invention vise également un casque audio, comprenant des moyens pour recevoir un flux audio à partir d'une source, une mémoire apte à stocker des préréglages de restitution, et un processeur apte à appliquer un traitement sonore sur le flux audio à restituer en réponse à un préréglage.

De façon caractéristique de l'invention, ce casque comprend en outre des moyens pour recevoir en association avec le flux audio un marqueur caractéristique dudit flux, et des moyens pour lire dans la mémoire et appliquer audit processeur un préréglage choisi en fonction du marqueur caractéristique reçu.

Selon une caractéristique additionnelle avantageuse mais optionnelle, le casque comprend en outre des moyens de mise à jour, à partir d'un terminal intelligent, desdits préréglages.

Un autre aspect de l'invention consiste en un terminal intelligent, comprenant un lecteur audio apte à générer un flux audio, des moyens de connexion, pour y appliquer le flux audio, avec un dispositif de restitution sonore susceptible de stocker des préréglages de restitution, et des moyens de communication réseau.

De façon caractéristique de l'invention, ce terminal intelligent comprend en outre des moyens pour créer et/ou sélectionner un préréglage de restitution au cours de la génération d'un flux audio, et des moyens pour transmettre à un serveur le préréglage créé et/ou sélectionné, en association avec un marqueur caractéristique du flux audio pour lequel ledit préréglage de restitution a été créé et/ou sélectionné.

Enfin, l'invention propose un procédé de restitution d'un flux audio par un casque audio, caractérisé en ce qu'il comprend les étapes suivantes :
a) réception par le casque audio d'un marqueur caractéristique d'un flux audio à restituer ;
b) récupération dans une mémoire du casque audio, à partir dudit marqueur caractéristique, d'un préréglage associé audit flux audio ;
c) application du préréglage à un dispositif de traitement audio ; et
d) restitution du flux audio traité par le dispositif de traitement audio en fonction du préréglage appliqué.

On va maintenant décrire une forme de réalisation préférée de l'invention, donnée à titre d'exemple non limitatif et faite en référence aux dessins annexés où les mêmes références désignent d'une figure à l'autre des éléments identiques ou fonctionnellement semblables.
La Figure 1 représente schématiquement les différents composants d'un système susceptible de mettre en oeuvre des procédés de la présente invention, et
La Figure 2 est un schéma-bloc illustrant les différentes fonctionnalités mises en oeuvre par un *smartphone* et un casque audio d'un utilisateur conformément aux enseignements de l'invention.

En référence aux dessins, on a représenté un système qui comprend un serveur 100 de partage de préréglages audio, un casque audio d'artiste 200, un terminal intelligent ou *smartphone* d'artiste 300, un casque audio d'utilisateur 400, et un terminal intelligent ou *smartphone* d'utilisateur 500. Comme on le détaillera dans la suite, le terminal intelligent 300 communique avec le casque d'artiste 200 par une liaison sans fil par exemple selon le protocole *Bluetooth.* De même, le terminal intelligent 500 communique avec le casque d'utilisateur 300 par une liaison sans fil selon le même type de protocole.

Les terminaux 300 et 500 sont par ailleurs dotés d'une fonctionnalité de communication par un réseau R tel que le réseau Internet, pour établir des sessions de communication avec le serveur 100, par exemple selon le protocole TCP/IP.

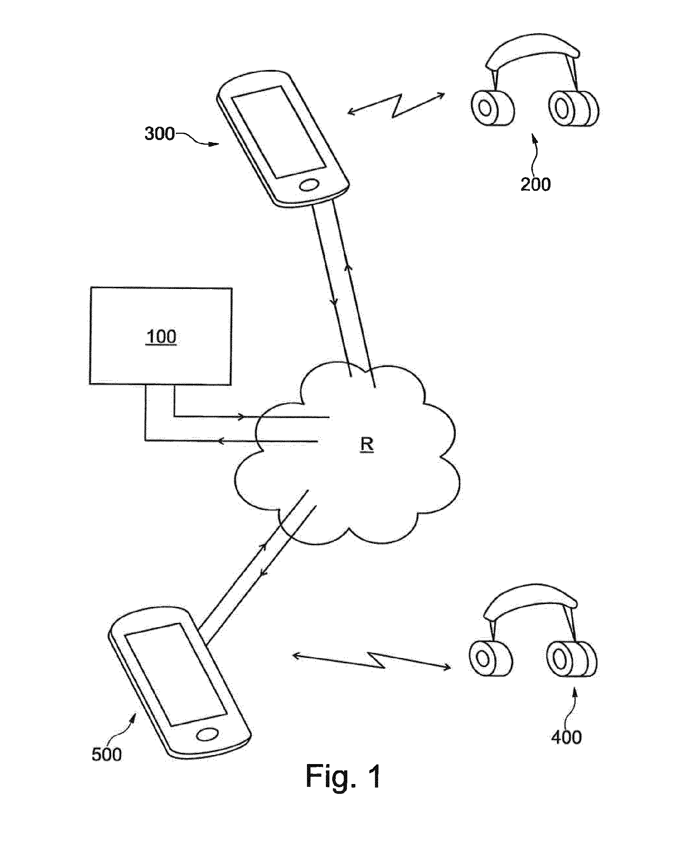

On va tout d'abord décrire de façon générale les fonctionnalités du système de la Figure 1.

À l'aide du casque 200 et du *smartphone* 300, un artiste ou autre référent écoute une oeuvre en choisissant différents préréglages de restitution audio mis en oeuvre par un processeur spécialisé 210 intégré au casque.

Les "préréglages de restitution" peuvent comprendre de façon non limitative des préréglages d'égalisation (graves, medium, aigus, etc.) et des préréglages d'effets sonores (spatialisation, réverbération, délais, compression, accentuation, etc.), ces différents effets étant connus en eux-mêmes.

Cette création de préréglages s'effectue à l'aide d'une interface utilisateur de préférence à écran tactile où des curseurs, boutons rotatifs, etc. virtuels sont actionnés par l'utilisateur pour obtenir les préréglages souhaités.

En variante, plutôt que de créer lui-même des préréglages, l'artiste peut appliquer successivement des préréglages préexistants mémorisés dans son terminal intelligent ou dans son casque audio (après les avoir éventuellement téléchargés à partir du serveur 100), et choisir le préréglage qu'il trouve le plus approprié.

Une autre variante peut être une approche mixte, où des préréglages de base sont proposés à l'artiste, et celui-ci les retouche.

Après avoir écouté l'oeuvre ou des parties de celle-ci avec différents préréglages de restitution (soit parmi des présélections, soit avec des réglages effectués par lui-même en agissant sur les paramètres de restitution), l'artiste utilise l'interface utilisateur de son terminal 300 pour que les préréglages obtenus (par création ou sélection) soient transmis au serveur en association avec des données caractéristiques de l'oeuvre, préférentiellement tout ou partie des métadonnées de l'oeuvre, aux fins de mise à disposition par les utilisateurs.

On notera ici qu'un préréglage donné créé ou choisi par un artiste peut être appliqué à une oeuvre ou morceau unique, ou bien à un ensemble d'oeuvres (par exemple les pistes d'un album ou des oeuvres de l'artiste), ou bien encore à un genre musical auquel appartient l'oeuvre, etc.

Par ailleurs, le système de l'invention permet à un artiste ou référent d'affecter des préréglages à des oeuvres d'autres artistes.

Les préréglages créés et mémorisés dans le serveur comme décrit dans ce qui précède peuvent être ensuite téléchargés vers des terminaux intelligents d'utilisateurs tels que le terminal 500, et transférés comme on va le voir en détail dans la suite vers une mémoire de préréglages prévue dans le casque audio associé 400.

Lors de la sélection par un utilisateur d'un fichier audio en vue de sa lecture par le terminal intelligent 500, cet utilisateur peut :
- soit (de manière en elle-même connue) sélectionner manuellement un préréglage à partir d'une liste de préréglages suggérés affichée sur l'écran du terminal,
- soit (de façon caractéristique de l'invention), dans le cas où il a choisi une affectation automatique, laisser le système (en l'occurrence le casque audio 400 comme on le décrira plus en détail dans la suite) sélectionner le préréglage qui a été affecté au fichier par un artiste.

Ce mode de sélection automatique, selon l'invention, d'un préréglage peut typiquement être mis en oeuvre lors de l'écoute de la musique via une liaison *Bluetooth* entre le terminal 500 et le casque audio 400, en exploitant ici le profil *Bluetooth* de distribution audio avancée A2DP (*Advanced Audio Distribution Profile*). À cet effet, le système utilise le profil de commande à distance audio-video AVRCP (*Audio Video Remote Control Profile*) pour récupérer et communiquer au casque audio 400 les informations ou marqueurs "tags" (métadonnées) relatives au morceau en cours de restitution (titre, artiste, album, genre, etc.) permettant d'effectuer la sélection d'un préréglage associé.

En variante, on peut utiliser d'autres moyens de récupération et de transmission de ces métadonnées, par exemple via une fonction d'achat intégrée telle que la fonction *In-App Purchase* proposée par Apple, Inc.

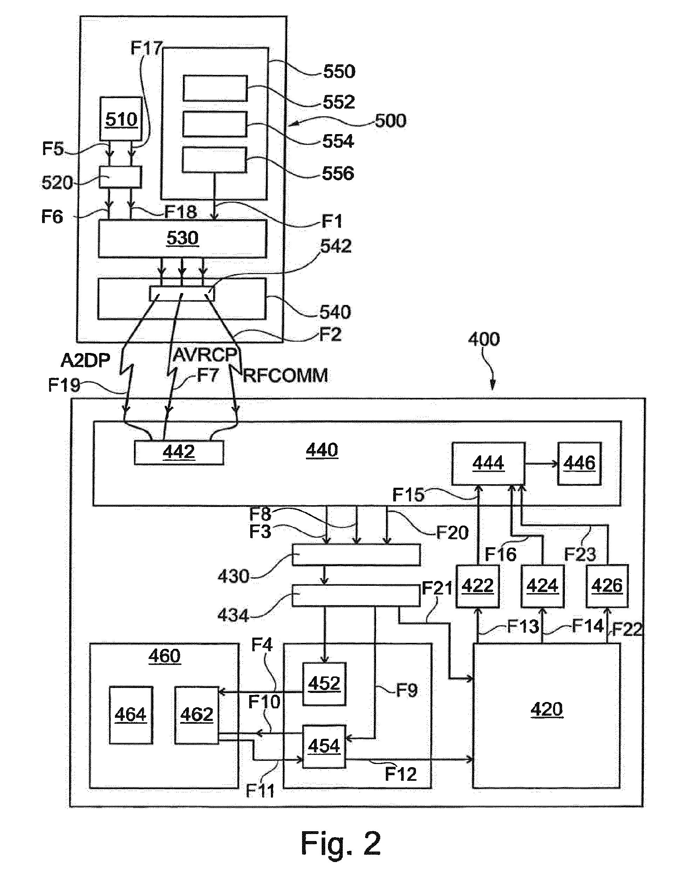

En référence maintenant à la Figure 2, on va décrire une architecture électronique côté terminal intelligent et côté casque audio permettant la mise en oeuvre de la présente invention.

Le terminal intelligent est le terminal utilisateur 500 de la Figure 1. Il comprend de façon connue en soi un lecteur 510 de fichiers audio par exemple aux formats MP3, AAC, WMA etc., qui coopère avec une pile de media 520 du terminal.

Une pile *Bluetooth* 530 est en communication avec la pile de media 520 et échange des données avec un composant ou puce *Bluetooth* 542 prévu sur la carte électronique 540 du terminal.

Un programme de gestion de préréglages audio 550 exécuté par le processeur du terminal comprend une interface utilisateur 552, un protocole de communication 554 et une interface de programmation d'application API (*Application Programming Interface*) 556 en communication avec la pile *Bluetooth* 530.

Le casque audio 400 comprend quant à lui une partie matérielle 440 dotée notamment d'une puce ou composant *Bluetooth* 442, d'un processeur de signal numérique ou DSP 444 destiné à traiter le flux audio à restituer (y compris la conversion numérique/analogique et l'amplification) et de transducteurs 446.

Le processeur 444 est piloté à partir d'un coeur ou noyau audio 420 par l'intermédiaire d'un coeur ou noyau d'égalisation 422, d'un coeur ou noyau de spatialisation 424 et d'un coeur ou noyau de gestion du lecteur 426. Un coeur ou noyau de préréglages audio 450 communique via un protocole de communication 434 avec une pile *Bluetooth* 430 échangeant des données avec la puce *Bluetooth* 442.

Ce coeur 450 coopère avec une base de données 460, par exemple au format *SQLite* (marque déposée), contenant un coeur de traitement de données 462 et des fichiers de préréglages 464.

Le coeur 450 comprend un sous-programme 452 d'insertion de préréglages dans la base de données 460, et un sous-programme 454 de récupération de préréglages à partir de la base de données.

Les puces *Bluetooth* 542, 442 du terminal intelligent et du casque audio communiquent entre elles par un profil *Bluetooth* de distribution audio avancée A2DP (*Advanced Audio Distribution Profile*), par un profil *Bluetooth* de commande à distance audio-video AVRCP (*Audio Video Remote Control Profile*), dans sa version 1.3 ou ultérieure, et enfin par le service RFCOMM (*Radio Frequency COMMunication*).

La coopération entre le terminal intelligent 400 et le casque 500 pour la transmission d'un préréglage de restitution sonore au casque 500 comprend les aspects suivants :
- un utilisateur met en oeuvre l'interface utilisateur 552 du programme de gestion de préréglages audio 550 pour créer un préréglage audio ou le télécharger à partir du serveur de préréglages 100, et le mémoriser dans le terminal intelligent ;
- le programme 550 peut alors envoyer le préréglage vers la pile *Bluetooth* 530 du terminal intelligent (flèche F1) ;
- ce préréglage est ensuite transmis au casque audio 400 en utilisant de préférence un protocole sur-mesure sur le service de transport *Bluetooth* RFCOM (flèches F2 et F3) ;
- le préréglage reçu par le coeur de préréglages 450 est chargé à l'aide du sous-programme 452 dans la base de données 460 (flèche F4).

Lors de la lecture d'une piste ou fichier audio :
- le lecteur de media 510 du terminal intelligent adresse les métadonnées ou marqueurs "tags" de la piste qu'il s'apprête à lire à la pile de media 520 dudit terminal (flèche F5) ;
- le terminal intelligent 500 envoie ces métadonnées au casque audio 400 via le profil AVRCP (flèches F6, F7, F8 et F9) ;
- le coeur de préréglages 450 recherche dans la base de données 460 un préréglage correspondant aux métadonnées reçues (requête F10). On rappellera ici que le critère de recherche d'un préréglage peut être un identifiant de morceau, d'album, d'artiste, de genre, etc. (au choix de l'artiste ou référent qui a créé le préréglage), toutes ces informations étant contenues dans les métadonnées associées au fichier audio à lire ;
- si la base de données 460 retrouve un préréglage, le coeur de préréglages 450 transmet celui-ci au coeur audio 420 (flèches F11 et F12). Si aucun préréglage n'est trouvé, des préréglages par défaut sont utilisés ;
- le coeur audio 420 applique ce préréglage pour qu'il soit affecté au flux sonore par le processeur 444, via les coeurs 422 et 424 (flèches F13, F14, F15, F16) ;
- enfin, le flux audio est émis par le lecteur 510 et transmis via le profil *Bluetooth* A2DP au casque audio 400 (flèches F17 à F23), pour atteindre le processeur 440, où les effets conformes au préréglage de restitution sélectionné comme ci-dessus sont appliqués au flux, et celui-ci est restitué.

On comprend que cette architecture permet de sélectionner des préréglages affectés à des pistes sonores, via les métadonnées ou marqueurs "tags" à l'aide de la base de données 460.

On observera ici que la mémorisation des préréglages de façon embarquée dans le casque audio 400 permet d'assurer une réactivité optimale lors d'un changement de préréglage lors de la transition entre la lecture d'une oeuvre et la lecture de l'oeuvre suivante, aucune transmission de préréglages n'étant nécessaire entre le terminal intelligent et le casque (puisque c'est ce dernier qui mémorise les préréglages et assure automatiquement leur sélection "intelligente"), seules les métadonnées ou marqueurs "tags" du fichier audio étant transmises.

On peut toutefois implémenter l'invention avec une transmission de préréglages dynamiquement en préalable à la lecture d'une oeuvre via le service RFCOMM. On peut également en variante prévoir d'encapsuler les préréglages dans les métadonnées d'un fichier audio.

La création de préréglages au niveau d'un terminal d'artiste 300 s'effectue avec un programme de gestion de préréglages qui peut être identique à celui du terminal d'utilisateur, ou consister en un programme dédié. Ainsi un artiste peut créer des préréglages spécifiques en association avec des oeuvres données, et le programme 550 comprend des moyens pour envoyer ces préréglages, en association avec les métadonnées des oeuvres pour lesquelles ces préréglages ont été choisis, au serveur de préréglages 100.

Les préréglages ainsi proposés par les artistes peuvent être rapatriés par les utilisateurs soit en temps différé, soit dynamiquement en préalable à la lecture d'une oeuvre.

Dans le premier cas, le terminal intelligent d'utilisateur 500 ouvre une session via le réseau Internet avec le serveur de préréglages 100, et parcourt les métadonnées des fichiers audio mémorisées dans le terminal 500 pour télécharger les nouvelles données des préréglages mis à disposition par des artistes depuis la dernière session, et - dans l'implémentation avec base de données de préréglages embarquée décrite plus haut-transmettre ces nouveaux préréglages à la base de données 460.

Dans le second cas, le terminal 500 consulte le serveur de préréglages 100 avant chaque lecture pour télécharger le préréglage correspondant aux métadonnées de l'oeuvre choisie pour la lecture (en cas de problème de communication, un préréglage par défaut est appliqué).

En variante, le serveur est à même d'envoyer des notifications aux utilisateurs de terminaux intelligents mettant en oeuvre "en *push"* le système de l'invention pour leur signaler l'existence de nouveaux préréglages disponibles pour des fichiers audio qui sont stockés dans leur terminal.

Selon une autre variante encore, le processus de mise à jour des préréglages peut être automatisé.

La présente invention trouve application dès qu'une communauté se trouve équipée de casques audio identiques ou similaires, en ce sens qu'ils sont capables de répondre à des préréglages communs pour restituer le son de la même manière. La chaine de restitution est ainsi entièrement maitrisée.

Bien entendu, la présente invention n'est pas limitée à la forme de réalisation et aux variantes décrites dans ce qui précède, mais l'homme du métier saura y apporter avec ses connaissances générales de nombreuses adaptations. En particulier :
- l'homme du métier saura adapter l'invention à la restitution sonore non pas à partir de fichiers audio mémorisés dans le terminal 500 et lus à la demande, mais en *streaming,* c'est-à-dire en flux à partir d'un serveur de contenus audio lus dans le serveur lui-méme ;
- dans le cas où plusieurs artistes ou référents ont proposé plusieurs préréglages différents pour une même oeuvre (ou un même album, etc.), l'interface utilisateur, ou un programme de sélection avancée approprié, permettra de sélectionner le préréglage à utiliser.

## Revendications

1. Un système de restitution sonore à l'aide de casques audio, comprenant :
- un ensemble de casques audio (200, 400) aptes à effectuer une restitution sonore en appliquant à l'aide d'un processeur sonore des traitements en réponse à des préréglages de restitution communs pour l'ensemble des casques ;
- un ensemble de terminaux intelligents (300, 500) pourvus de moyens de génération d'un flux audio ;
- des moyens de communication entre les terminaux intelligents et les casques audio associés, aptes à transmettre à ces derniers à partir des terminaux intelligents un flux audio ainsi que des préréglages de restitution à appliquer audit flux ;
- un serveur (100) de préréglages, apte à mémoriser des préréglages de restitution associés respectivement à des oeuvres ;
- des moyens de communication par réseau (R) entre ledit serveur et les terminaux intelligents ; et
- des moyens prévus dans au moins certains terminaux intelligents (500) pour récupérer à partir du serveur des préréglages de restitution associés à des oeuvres pour lesquelles ils sont susceptibles d'émettre des flux audio, et pour les transmettre au casque audio associé en vue de la restitution,
système **caractérisé en ce que** :
- les moyens de communication sont également aptes à transmettre aux casques audio à partir des terminaux intelligents des marqueurs caractéristiques associés au flux audio ;
- il est prévu dans au moins certains terminaux intelligents (300) des moyens pour générer des préréglages de restitution associés à des oeuvres en réponse à des actions via une interface utilisateur, et à les transmettre au serveur ; et
- il est prévu dans chaque casque audio (400) une mémoire contenant une base de données (460) de préréglages de restitution, et des moyens (450) pour former une requête d'interrogation de la base de données à partir desdits marqueurs caractéristiques reçus d'un terminal intelligent (500) en association avec un flux audio afin de retrouver les préréglages de restitution correspondants.

2. Le système de la revendication 1, dans lequel les marqueurs caractéristiques sont des marqueurs d'identification d'au moins l'un parmi un morceau, un album, un artiste, un genre.

3. Un ensemble formé d'un casque audio (400) et d'un terminal intelligent (500), le terminal intelligent étant apte à transmettre un flux audio au casque audio par une liaison, ensemble dans lequel le casque audio comprend :
- un processeur (444) apte à appliquer un traitement sonore sur le flux audio à restituer en réponse à un marqueur caractéristique associé au flux audio ;
- une mémoire (460) apte à stocker des préréglages ; et
- des moyens (450) pour lire dans la mémoire et appliquer audit processeur un préréglage choisi en fonction du marqueur caractéristique reçu,
ensemble **caractérisé en ce que** :
- le terminal intelligent est également apte à transmettre au casque audio des marqueurs caractéristiques associées audit flux audio ; et
- le casque audio comprend des moyens (450) pour lire dans la mémoire et appliquer au processeur un préréglage choisi dans la mémoire en fonction du marqueur caractéristique reçu du terminal intelligent.

4. L'ensemble de la revendication 3, dans lequel lesdits marqueurs caractéristiques sont des métadonnées associées à un fichier audio apte à être lu dans le terminal intelligent (500).

5. L'ensemble de la revendication 3, dans lequel le terminal intelligent comprend des moyens (550) de mise à jour des préréglages de restitution mémorisés dans le casque audio, à partir de préréglages de restitution récents reçus via un réseau à partir d'un serveur de préréglages.

6. Un casque audio (400), comprenant :
- des moyens pour recevoir un flux audio à partir d'une source ;
- une mémoire (460) apte à stocker des préréglages de restitution ; et
- un processeur (444) apte à appliquer un traitement sonore sur le flux audio à restituer en réponse à un préréglage,
**caractérisé en ce qu'**il comprend en outre :
- des moyens pour recevoir en association avec le flux audio un marqueur caractéristique dudit flux ; et
- des moyens (450) pour lire dans la mémoire et appliquer audit processeur un préréglage choisi en fonction du marqueur caractéristique reçu.

7. Le casque audio de la revendication 6, dans lequel lesdits marqueurs caractéristiques sont des métadonnées associées à un fichier audio apte à être lu par un terminal intelligent.

8. Le casque audio de la revendication 6, comprenant en outre des moyens de mise à jour (450, 460), à partir d'un terminal intelligent, desdits préréglages.

9. Un terminal intelligent, comprenant :
- un lecteur audio (510) apte à générer un flux audio ;
- des moyens de connexion (530, 540), pour y appliquer le flux audio, avec un dispositif de restitution sonore susceptible de stocker des préréglages de restitution ; et
- des moyens de communication réseau (R),
**caractérisé en ce qu'**il comprend en outre :
- des moyens (550) pour créer et/ou sélectionner un préréglage de restitution au cours de la génération d'un flux audio ; et
- des moyens pour transmettre à un serveur le préréglage créé et/ou sélectionné, en association avec un marqueur caractéristique du flux audio pour lequel ledit préréglage de restitution a été créé et/ou sélectionné.

10. Un procédé de restitution d'un flux audio par un casque audio, **caractérisé en ce qu'**il comprend les étapes suivantes :
a) réception par le casque audio (400) d'un marqueur caractéristique d'un flux audio à restituer ;
b) récupération dans une mémoire (460) du casque audio, à partir dudit marqueur caractéristique, d'un préréglage associé audit flux audio ;
c) application du préréglage à un dispositif de traitement audio (444) ; et
d) restitution du flux audio traité par le dispositif de traitement audio en fonction du préréglage appliqué.
